# EUROPÄISCHE PATENTSCHRIFT

(11) **EP 2 195 203 B1**
(45) Veröffentlichungstag und Bekanntmachung des Hinweises auf die Patenterteilung: **12.09.2012**
(21) Anmeldenummer: 08774016.3
(22) Anmeldetag: 17.07.2008
(51) Int. Cl.: B60R 21/2165, B60R 21/205

(54) **ARMATURENTAFELTRÄGERTEIL MIT KLAPPENANORDNUNG FÜR AIRBAG**
INSTRUMENT PANEL SUPPORT HAVING FLAP ARRANGEMENT FOR AIRBAG
ÉLÉMENT PORTEUR DE TABLEAU DE BORD AVEC SYSTÈME DE VOLET POUR AIRBAG

(30) Priorität: 27.09.2007 DE 102007046155
(43) Veröffentlichungstag der Anmeldung: 16.06.2010
(73) Patentinhaber: GM Global Technology Operations LLC, Detroit, MI 48265-3000 (US)
(72) Erfinder: RICK, Ulrich, 55595 Braunweiler (DE); WAGNER, Udo, 65428 Rüsselsheim (DE)
(74) Vertreter: Strauss, Peter
(86) Internationale Anmeldenummer: PCT/EP2008/005838
(87) Internationale Veröffentlichungsnummer: WO 2009/043400

(56) Entgegenhaltungen:
- EP-A- 0 684 168
- EP-A- 0 715 992
- EP-A1- 0 715 992
- WO-A-03/033313
- DE-A1- 19 505 214
- DE-T2- 60 300 905

## Beschreibung

Die vorliegende Erfindung betrifft ein Armaturentafelträgerteil nach dem Oberbegriff des Anspruchs 1 zur Befestigung an einer Armaturentafel eines Kraftfahrzeugs mit einer Airbagaustrittsöffnung zum Entfalten eines Beifahrer-Airbags und einer Klappenanordnung, die die Airbagaustrittsöffnung verschließt.

Zur Erhöhung der passiven Sicherheit eines Beifahrers eines Kraftfahrzeuges ist es bekannt, im Bereich der Armaturentafel einen Beifahrer-Airbag anzuordnen, der sich im Falle einer Kollision entfaltet und so den sich unter Trägheitskräften nach vorne verlagernden Beifahrer abfängt. Dabei ist der Beifahrer-Airbag im zusammengefalteten Zustand auf einer dem Fahrgastraum abgewandten Seite der Armaturentafel angeordnet und tritt im Bedarfsfall durch eine Airbagaustrittsöffnung in den Fahrgastraum aus. Aus ästhetischen Gründen und um den Airbag vor Beschädigungen und Umwelteinflüssen zu schützen, ist die Airbagaustrittsöffnung dabei verschlossen und wird erst durch den sich entfaltenden Airbag geöffnet.

Beispielsweise aus der DE 43 15 853 C2 und der EP 0 363 986 A2 sind hierzu Klappenanordnungen mit separaten, d. h. von außen für die Insassen sichtbaren Klappen bekannt, die an der Armaturentafel oder einem Beifahrer-Airbagmodul befestigt sind und durch den sich entfaltenden Airbag herausgedrückt werden.

Alternativ hierzu sind integrierte, d. h. für die Insassen nicht sichtbare Klappenanordnungen bekannt.

Alternativ hierzu sind integrierte, d. h. für die Insassen nicht sichtbare Klappenanordnungen bekannt. Beispielsweise schlägt die DE 43 11 241 C1 vor, die Klappenanordnung einteilig mit der sie umgebenden Armaturentafel auszubilden und durch entsprechende Stanz- oder Schneidevorgänge mit Stegen verbundene Sollbruchstellen auszubilden.

Alternativ schlagen die DE 43 06 149 A1 und die DE 44 20 929 A1 ein Armaturentafelträgerteil nach dem Oberbegriff des Anspruchs 1 vor, dass mittels Schrauben an der Armaturentafel befestigt wird und rahmenförmig eine Airbagaustrittsöffnung umgibt, die durch mit dem Armaturentafelträgerteil verbundene Klappen verschlossen ist.

Die jeweils zwei Klappen der Klappenanordnung sind entlang von Sollbruchstellen durch eine Deckfolie sowie entlang einer Scharnierlinie mit dem Armaturentafelträgerteil verbunden. Diese Lösung erfordert eine relativ hohe Kraft zum Öffnen der Klappen der Klappenanordnung. Das kann dazu führen, dass die entsprechend beschleunigten Klappen mit einem hohen Impuls auf eine Windschutzscheibe des Kraftfahrzeugs treffen und diese beschädigen, was wiederum zu einer Beschädigung des Airbags führen kann.

Um dies zu vermeiden, schlägt beispielsweise die DE 41 05 028 A1 vor, die Klappen der Klappenanordnung mit einer Polsterung zu versehen. Dies bedingt jedoch ebenso wie die in der DE 44 20 929 A1 und der DE 43 06 149 A1 vorgeschlagene Lösung relativ große Wandstärken der Klappenanordnung, verbunden mit einem entsprechend hohen Gewicht.

Näheres zum Stand der Technik enthält die WO 03/033313 A1, die nach Ansicht des Europäischen Patentamtes ein Armaturentafelträgerteil zur Befestigung an einer Armaturentafel eines Kraftfahrzeuges offenbart, mit einer Airbagaustrittsöffnung zum Entfalten eines Beifahrerairbags, und einer Klappenanordnung, die an dem Armaturentafelträgerteil anscharniert ist und die Airbagaustrittsöffnung verschließt, wobei das Armaturentafelträgerteil eine Vertiefung aufweist, in der die Klappenanordnung aufgenommen ist, und die Klappenanordnung aus einer separaten Klappe besteht, die die gesamte Airbagaustrittsöffnung verschließt, nur entlang einer Scharnierlinie mit dem Armaturentafelträgerteil verbunden ist und entlang ihres restlichen Umfanges in der Vertiefung aufliegt.

Die DE 603 00 905 T2, die EP 0 684 168 A sowie die DE 195 05 214 A1 lehren ebenfalls eine (Klappen-) Anordnung, die eine Airbagaustrittsöffnung verschließt und die in einer Vertiefung eines Armaturentafelträgerteils aufgenommen ist.

Vor dem obigen Hintergrund ist es eine Aufgabe der vorliegenden Erfindung, ein Armaturentafelträgerteil mit einer Klappenanordnung zum Verschließen einer Airbagaustrittsöffnung zur Verfügung zu stellen, bei der die Gefahr einer Beschädigung der Windschutzscheibe reduziert ist.

Diese Aufgabe wird durch die Merkmale des Anspruchs 1 gelöst. Vorteilhafte Ausführungsformen der Erfindung sind Gegenstand der Unteransprüche.

Ein Armaturentafelträgerteil nach der vorliegenden Erfindung ist zur Befestigung an einer Armaturentafel eines Kraftfahrzeugs vorgesehen. Die Befestigung kann gleichermaßen lösbar, beispielsweise mittels Verschrauben und/oder Verrasten, oder umlösbar, beispielsweise durch Vernieten, Verkleben und/oder Verschweißen erfolgen. Das Armaturentafelträgerteil kann auch integral, insbesondere einstückig mit der Armaturentafel ausgebildet sein.

In dem Armaturentafelträgerteil ist eine Airbagaustrittsöffnung vorgesehen, die durch das Armaturentafelträgerteil bevorzugt rahmenförmig umgeben ist, und durch die ein sich entfaltender Beifahrer-Airbag in einen Fahrgastraum austreten kann. Die Airbagaustrittsöffnung ist bei verstautem Beifahrer-Airbag durch eine Klappenanordnung verschlossen, die an dem Armaturentafelträgerteil anscharniert ist und durch den sich entfaltenden Beifahrer-Airbag geöffnet werden kann.

Erfindungsgemäß weist das Armaturentafelträgerteil eine Vertiefung auf, in der die Klappenanordnung aufgenommen ist. Die Klappenanordnung besteht aus einer einzigen, separaten Klappe, die die gesamte Airbagaustrittsöffnung verschließt und nur entlang einer Scharnierlinie mit dem Armaturentafelträgerteil verbunden ist, während sie längs ihres restlichen Umfanges in der Vertiefung aufliegt.

Da die Klappe längs ihres restlichen Umfanges nur in der Vertiefung aufliegt und sich somit an dem Armaturentafelträgerteil formschlüssig abstützt, können die zur Öffnung der Klappe erforderlichen Kräfte reduziert und so die Gefahr einer Beschädigung einer Windschutzscheibe, der Armaturentafel oder dergleichen verringert werden. Vorteilhafterweise können solche geringen Öffnungskräfte auch durch kleinere Gasgeneratoren und weniger steife Airbags realisiert werden.

Gleichzeitig verhindert die formschlüssige Auflage der Klappe in der Vertiefung jedoch zuverlässig eine ungewollte Bewegung der Klappe, insbesondere ein Eindrücken in Richtung des Beifahrer-Airbags.

Damit wird erfindungsgemäß eine Klappenanordnung geschaffen, die den Beifahrer-Airbag zuverlässig schützt und trotzdem mit geringen Kräften geöffnet werden kann. Ein weiterer Vorteil besteht darin, dass das erfindungsgemäße Armaturentafelträgerteil mit der daran befestigten Klappenanordnung einfach hergestellt werden kann.

Aufgrund der Abstützung kann insbesondere der Scharniermechanismus, mit dem die Klappe an dem Armaturentafelträgerteil befestigt ist, und die Klappe selber mit geringerer Steifigkeit und damit mit geringerem Gewicht ausgeführt sein, was die Öffnungskräfte weiter reduziert.

Bei einer entsprechend dünnen und damit flexiblen Klappe kann der Scharniermechanismus insbesondere durch die Flexibilität der Klappe selber gebildet werden, die sich in ihrem nicht mit dem Armaturentafelträgerteil verbundenen Bereich unter elastischer oder plastischer Deformation von der Airbagaustrittsöffnung wegbiegen lässt. Durch die Ausbildung der Klappenanordnung mit einer einzigen Klappe, die nur längs ihrer Scharnierlinie mit dem Armaturentafelträgerteil verbunden ist, werden zudem geometrisch einfachere Klappenkonturen möglich, was vorteilhaft Entwicklungskosten senkt und die Zuverlässigkeit eines Airbagsystems erhöht.

Die Klappe kann an dem Armaturentafelträgerteil lösbar, insbesondere durch Verschrauben und/oder Verrasten befestigt sein. Vorteilhaft ist dadurch ein Austausch der Klappe möglich, insbesondere, wenn diese sich durch den sich öffnenden Beifahrer-Airbag beim Wegklappen plastisch deformiert hat.

Alternativ hierzu kann die Klappe an dem Armaturentafelträgerteil unlösbar, insbesondere durch Verschweißen, Verkleben und/oder Vernieten befestigt sein. Dies ermöglicht eine besonders einfache und zuverlässige Verbindung mit geringem Montageaufwand.

Wie bereits vorstehend ausgeführt, kann der Scharniermechanismus, über den die Klappe mit dem Armaturentafelträgerteil verbunden ist, durch elastische Deformation einer hierzu vorzugsweise elastischen, insbesondere mit geringer Materialstärke ausgebildeten Klappe ausgebildet sein. Insbesondere kann die Klappe im Bereich einer gewünschten Scharnierlinie eine Materialverdünnung aufweisen. Gleichermaßen sind jedoch auch andere Scharniere, beispielsweise Filmscharniere möglich, die durch Befestigen entsprechend flexibler textiler, metallischer oder Kunststofffilme an dem Armaturentafelträgerteil und der Klappe ausgebildet sein können.

In einer bevorzugten Ausführung ist eine Schicht vorgesehen, die die Klappenanordnung und das Armaturentafelträgerteil einstückig, insbesondere mit einer durchgehenden Oberfläche bedeckt, so dass die Klappenanordnung für die Insassen nicht sichtbar ist. Die Schicht kann, bevorzugt auf einer dem Fahrgastraum abgewandten Seite, Materialverdünnungen längs des Umfanges der Klappe aufweisen, so dass die Schicht beim Öffnen der Klappe dort reißt und die Airbagaustrittsöffnung freigibt. Die auf der Klappenanordnung und dem sie rahmenartig umgebenden Armaturentafelträgerteil angeordnete Schicht verdeckt nicht nur ästhetisch vorteilhaft die Klappenanordnung, sondern kann diese zudem gegen ihre Auflage in der Vertiefung des Armaturentafelträgerteils vorspannen und so ein Klappern der Klappenanordnung verhindern.

Die Schicht kann gleichermaßen aus einem oder mehreren Kunststoffschäumen, einer oder mehreren Folien und/oder einer oder mehrerer Schaumfolien bestehen. Bevorzugt ist direkt auf der Klappenanordnung und dem Armaturentafelträgerteil ein Kunststoffschaum angeordnet, um diese Teile gegenüber dem Fahrgastinnenraum abzupolstern. Darüber kann vorteilhaft eine Folie angeordnet sein, um den Fahrgastinnenraum ästhetisch ansprechend zu gestalten und eine Beschädigung des vorzugsweise weichen Kunststoffschaumes zu verhindern.

Bevorzugt kann die Schicht auch einstückig, insbesondere mit einer durchgehenden Oberfläche, die Armaturentafel ganz oder teilweise bedecken, an der das Armaturentafelträgerteil befestigt ist. Dies schafft eine Armaturentafel mit einer weitestgehend durchgehenden Oberfläche, die unanfälliger für Verschmutzungen ist und leichter gereinigt werden kann. Gleichermaßen kann die Schicht auch nur auf dem Armaturentafelträgerteil und der Klappenanordnung angeordnet sein, so dass nach einer Aktivierung des Beifahrer-Airbags nur das Armaturentafelträgerteil ausgewechselt werden muss und eine Beschichtung der Armaturentafel unverletzt bleibt.

Wie vorstehend ausgeführt, ist es, insbesondere zur Ausbildung des Scharniermechanismus und zur Reduzierung des Gewichtes, vorteilhaft, die Klappe mit einer geringen Wandstärke auszubilden. Da jedoch erfindungsgemäß eine einzige Klappe die gesamte Airbagaustrittsöffnung verschließt, kann es vorteilhaft sein, auf der Klappe, insbesondere in einem sich an die Scharnierlinie anschließenden Bereich, eine Versteifungsstruktur, insbesondere eine Rippenstruktur vorzusehen, um ein unbeabsichtigtes Eindrücken der Klappe in Richtung des Beifahrer-Airbags zu verhindern. Vorteilhafterweise wird diese Versteifungsstruktur auf der dem Fahrgastraum abgewandten Seite der Klappe ausgebildet, um die dem Fahrgastraum zugewandte Oberfläche nicht zu beeinträchtigen. Zusätzlich oder alternativ können Versteifungsstrukturen auch in der Klappe vorgesehen sein, beispielsweise mittels eingegossener Verstärkungen aus Metall, Glas- oder Kohlefasern.

Bevorzugt ist die Vertiefung, in der die Klappe angeordnet ist, auf einer dem Fahrgastraum zugewandten Seite des Armaturentafelträgerteils angeordnet und ermöglicht so ein Öffnen der Klappe mit geringeren Kräften unter Abheben der Klappe von dem Armaturentafelträgerteil in den Fahrgastraum hinein.

Bevorzugt entspricht die Vertiefung, in der die Klappe angeordnet ist, im Wesentlichen deren Außenkonturen, so dass sich nur ein geringer Spalt zwischen Armaturentafelträgerteil und darin aufgenommener Klappe ergibt. Vorteilhaft kann dabei die Klappe mit einer dem Fahrgastraum zugewandten Seite mit der Oberfläche des Armaturentafelträgerteils fluchten.

Bevorzugt entspricht die Außenkontur der Klappe im Wesentlichen der Airbagaustrittsöffnung und überdeckt diese längs ihres Umfanges nur geringfügig, so dass die Klappe ein möglichst geringes Massenträgheitsmoment aufweist und dementsprechend niedrige Kräfte zum Öffnen erforderlich sind.

Die Scharnierlinie, längs der die Klappe mit dem Armaturentafelträgerteil verbunden ist, kann bevorzugt auf einer einer Windschutzscheibe des Kraftfahrzeugs abgewandten Seite des Armaturentafelträgerteils angeordnet sein, so dass die Klappe von der Windschutzscheibe wegklappt und diese beim Öffnen nicht beschädigt. Um eine Beeinträchtigung des Fußraumes vor der Armaturentafel durch die herausklappende Klappe zu vermeiden und insbesondere den sich entfaltenden Luftsack teilweise zu lenken, kann die Scharnierlinie jedoch auch anders orientiert sein, insbesondere im Wesentlichen parallel zu der Windschutzscheibe an einer der Windschutzscheibe zugewandten Seite des Armaturentafelträgerteils angeordnet sein.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: ein Armaturentafelträgerteil 1 nach einer Ausführung der vorliegenden Erfindung im Querschnitt; und
- Fig. 2: das Armaturentafelträgerteil nach Fig. 1 in perspektivischer Darstellung.

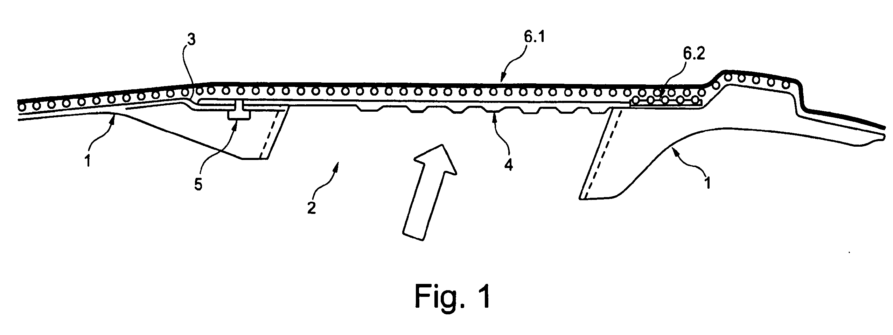

Fig. 1 zeigt ein Armaturentafelträgerteil 1 nach einer Ausführung der vorliegenden Erfindung im Querschnitt. Das Armaturentafelträgerteil 1 ist mittels Schrauben an einer Armaturentafel eines Kraftfahrzeugs befestigt (nicht dargestellt).

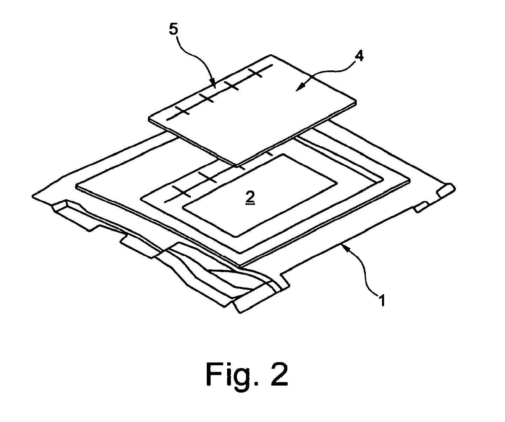

Es weist eine im Wesentlichen rechteckförmige (vgl. Fig. 2) Airbagaustrittsöffnung 2 auf, durch die ein sich entfaltender Beifahrer-Airbag (nicht dargestellt) längs der durch einen Pfeil in Fig. 1 angedeuteten Ausschussrichtung in den Fahrgastraum austreten kann. Ein Beifahrer-Airbagmodul (nicht dargestellt) ist hierzu an dem Armaturentafelträgerteil 1, der Armaturentafel oder einem Teil der Fahrzeugstruktur, insbesondere einem Querträger befestigt (nicht dargestellt).

Die Airbagaustrittsöffnung 2 ist durch eine separate Klappe 4 verschlossen. Hierzu weist das Armaturentafelträgerteil 1 eine ringförmige Vertiefung 3 längs des Umfanges der Airbagaustrittsöffnung 2, die im Wesentlichen der Kontur der Klappe 4 entspricht (vgl. Fig. 2).

In dieser Vertiefung 3 ist die Klappe 4 längs einer Scharnierlinie 5 mittels Blindnieten befestigt. Längs ihres übrigen, im Ausführungsbeispiel U-förmigen Umfanges überlappt die Klappe 4 die Airbagaustrittsöffnung 2 des Armaturentafelträgerteils 1 geringfügig und liegt in der Vertiefung 3 auf, so dass sie sich entgegen der Ausschussrichtung des Airbags auf dem Armaturentafelträgerteil formschlüssig abstützt.

Die Klappe 4 ist als dünnwandiges Kunststoffurformteil hergestellt und im Bereich der Befestigung an dem Armaturentafelträgerteil flexibel, so dass sie sich bei Beaufschlagung in Ausschussrichtung längs einer im Wesentlichen durch die Blindnieten verlaufenden Scharnierlinien 5 von der Airbagaustrittsöffnung 2 wegklappen lässt. Hierdurch ist ein Scharniermechanismus ausgebildet, mit dem die Klappe 4 an dem Armaturentafelträgerteil 1 anscharniert ist.

In dem an die Scharnierlinie 5 anschließenden Bereich der Klappe 4 ist diese mit einer Versteifungsstruktur in Form von Querrippen versehen, die sich bei in der Vertiefung 3 aufliegender Klappe 4 zwischen den Auflageflächen, d. h. in der Airbagaustrittsöffnung 2 erstrecken und so ein Eindrücken der Klappe 4 in Richtung des Beifahrer-Airbags (entgegen der Pfeilrichtung in Fig. 1) erschweren.

Auf der dem Fahrgastraum zugewandten Seite (oben in Fig. 1) ist auf der Klappe 4 und dem Armaturentafelträgerteil 1 ein Kunststoffschaum 6.2 zur Abpolsterung aufgebracht, der von einer Folie 6.1 zum Schutz des Kunststoffschaumes 6.2 bedeckt ist. Folie 6.1 und Kunststoffschaum 6.2 bilden zusammen eine einstückige Schicht, die gegenüber dem Fahrgastraum eine durchgehende Oberfläche der Armaturentafel im Bereich des Armaturentafelträgerteils bildet. Diese Schicht weist eine so geringe Festigkeit auf, dass sie durch den sich entfaltenden Luftsack und die sich dabei öffnende Klappe 4 leicht zerrissen werden kann.

Die Schicht aus Folie 6.1 und Kunststoffschaum 6.2 wird im Ausführungsbeispiel nach dem Einbau des Beifahrer-Airbagmoduls und des Armaturentafelträgerteils 1 so aufgebracht, dass sie einstückig mit durchgehender Oberfläche sowohl das Armaturentafelträgerteil 1 mit dessen Klappe 4 als auch einen dieses umgebenden Teil der Armaturentafel bedeckt, an der das Armaturentafelträgerteil befestigt ist. Hierdurch ergibt sich eine durchgehende und dementsprechend leicht zu reinigende Oberfläche.

In einer Abwandlung bedeckt die aus Folie 6.1 und dem Kunststoffschaum 6.2 bestehende Schicht nur das Armaturentafelträgerteil 1 und die Klappe 4, so dass das Armaturentafelträgerteil 1 mit daran befestigter Klappe 4 vorab vollständig gefertigt und bei Bedarf, insbesondere nach einer Aktivierung des Beifahrer-Airbags einfach ersetzt werden kann.

### Bezugszeichenliste

| | |
|---|---|
| 1 | Armaturentafelträgerteil |
| 2 | Airbagaustrittsöffnung |
| 3 | Vertiefung |
| 4 | Klappe |
| 5 | Scharnierlinie |
| 6.1 | Folie |
| 6.2 | Kunststoffschaum |

## Patentansprüche

1. Armaturentafelträgerteil (1) zur Befestigung an einer Armaturentafel eines Kraftfahrzeuges, mit einer Airbagaustrittsöffnung (2) zum Entfalten eines Beifahrerairbags, und einer Klappenanordnung, die an dem Armaturentafelträgerteil (1) anscharniert ist und die Airbagaustrittsöffnung (2) verschließt, wobei das Armaturentafelträgerteil (1) eine Vertiefung (3) aufweist, in der die Klappenanordnung aufgenommen ist, und die Klappenanordnung aus einer separaten Klappe (4) besteht, die die gesamte Airbagaustrittsöffnung (2) verschließt, nur entlang einer auf der Vertiefung liegenden Scharnierlinie (5) mit dem Armaturentafelträgerteil (1) verbunden ist und entlang ihres restlichen Umfanges in der Vertiefung (3) aufliegt.

2. Armaturentafelträgerteil (1) nach Anspruch 1, wobei die separate Klappe (4) an dem Armaturentafelträgerteil (1) lösbar, insbesondere durch Verschrauben und/oder Verrasten befestigt ist.

3. Armaturentafelträgerteil (1) nach Anspruch 1, wobei die separate Klappe (4) an dem Armaturentafelträgerteil (1) unlösbar, insbesondere durch Verschweißen, Verkleben und/oder Vernieten befestigt ist.

4. Armaturentafelträgerteil (1) nach einem der vorhergehenden Ansprüche, wobei die Klappenanordnung eine Schicht (6.1, 6.2) aufweist, die einstückig, insbesondere mit einer durchgehender Oberfläche, auch das Armaturentafelträgerteil (1) bedeckt.

5. Armaturentafelträgerteil (1) nach Anspruch 4, wobei die Schicht (6.1, 6.2) Kunststoffschaum (6.2), eine Folie (6.1) und/oder eine Schaumfolie umfasst.

6. Armaturentafelträgerteil (1) nach einem der vorhergehenden Ansprüche 4 bis 5, wobei die Schicht (6.1, 6.2) einstückig, insbesondere mit einer durchgehender Oberfläche, auch die Armaturentafel bedeckt.

7. Armaturentafelträgerteil (1) nach einem der vorhergehenden Ansprüche, wobei die Klappe (4) auf ihrer dem Fahrgastraum abgewandten Seite eine Versteifungsstruktur, insbesondere eine Rippenstruktur aufweist.

8. Armaturentafelträgerteil (1) nach einem der vorhergehenden Ansprüche, wobei die Vertiefung (3) auf einer dem Fahrgastraum zugewandten Seite des Armaturentafelträgerteils (1) ausgebildet ist.

9. Armaturentafelträgerteil (1) nach einem der vorhergehenden Ansprüche, wobei die Vertiefung (3) im Wesentlichen der Außenkontur der Klappe (4) entspricht.

10. Armaturentafelträgerteil (1) nach einem der vorhergehenden Ansprüche, wobei das Armaturentafelträgerteil (1) lösbar oder unlösbar an der Armaturentafel befestigt ist.

11. Armaturentafelträgerteil (1) nach einem der vorhergehenden Ansprüche, wobei die Klappe (4) an einer einer Windschutzscheibe zugewandten oder abgewandten Seite des Armaturentafelträgerteil (1) mit diesem verbunden ist.

## Claims

1. An instrument panel support part (1) for fixing to an instrument panel of a motor vehicle, comprising an airbag outlet opening (2) for unfolding a front passenger airbag, and a flap arrangement which is hinged to the instrument panel support part (1) and closes the airbag outlet opening (2), wherein the instrument panel support part (1) has a depression (3) in which the flap arrangement is accommodated, and the flap arrangement consists of a separate flap (4) which closes the entire airbag outlet opening (2), is connected with the instrument panel support part (1) only along a hinge line (5) resting on the depression, and rests in the depression (3) along its remaining circumference.

2. An instrument panel support part (1) according to claim 1, wherein the separate flap (4) is detachably fixed to the instrument panel support part (1), especially by screwing and/or latching.

3. An instrument panel support part (1) according to claim 1, wherein the separate flap (4) is non-detachably fixed to the instrument panel support part (1), especially by welding, gluing and/or riveting.

4. An instrument panel support part (1) according to one of the preceding claims, wherein the flap arrangement comprises a layer (6.1, 6.2) which also integrally covers the instrument panel support part (1), especially with a continuous surface.

5. An instrument panel support part (1) according to claim 4, wherein the layer (6.1, 6.2) comprises plastic foam (6.2), a foil (6.1) and/or a foam foil.

6. An instrument panel support part (1) according to one of the preceding claims, wherein the layer (6.1, 6.2) also integrally covers the instrument panel, especially with a continuous surface.

7. An instrument panel support part (1) according to one of the preceding claims, wherein the flap (4) comprises a stiffening structure, especially a rib structure, on its side facing away from the passenger compartment.

8. An instrument panel support part (1) according to one of the preceding claims, wherein the depression (3) is arranged on a side of the instrument panel support part (1) which faces the passenger compartment.

9. An instrument panel support part (1) according to one of the preceding claims, wherein the depression (3) substantially corresponds to the outside contour of the flap (4).

10. An instrument panel support part (1) according to one of the preceding claims, wherein the instrument panel support part (1) is detachably or non-detachably fixed to the instrument panel.

11. An instrument panel support part (1) according to one of the preceding claims, wherein the flap (4) is connected to the instrument panel support part (1) on a side of said instrument panel support part (1) which faces towards or away from a windshield.

## Revendications

1. Élément de support de tableau de bord (1) destiné à être fixé sur un tableau de bord d'un véhicule à moteur, avec une ouverture de sortie d'airbag (2) pour le déploiement d'un airbag passager et un dispositif de volet qui est articulé sur l'élément de support de tableau de bord (1) et ferme l'ouverture de sortie d'airbag (2), dans lequel l'élément de support de tableau de bord (1) présente un creux (3) dans lequel se loge le dispositif de volet et le dispositif de volet est formé par un volet séparé (4) qui ferme toute l'ouverture de sortie d'airbag (2), est relié à l'élément de support de tableau de bord (1) uniquement le long d'une ligne de charnière (5) disposée sur le creux et repose dans le creux (3) sur le reste de sa circonférence.

2. Élément de support de tableau de bord (1) selon la revendication 1, dans lequel le volet séparé (4) est fixé sur l'élément de support de tableau de bord (1) de manière amovible, en particulier par vissage et/ou par emboîtement.

3. Élément de support de tableau de bord (1) selon la revendication 1, dans lequel le volet séparé (4) est fixé à l'élément de support de tableau de bord (1) de manière inamovible, en particulier par soudage, collage et/ou rivetage.

4. Élément de support de tableau de bord (1) selon l'une des revendications précédentes, dans lequel le dispositif de volet présente une couche (6.1, 6.2) qui recouvre aussi d'un seul tenant, en particulier avec une surface continue, l'élément de support de tableau de bord (1).

5. Élément de support de tableau de bord (1) selon la revendication 4, dans lequel la couche (6.1, 6.2) comprend de la mousse de plastique (6.2), un film (6.1) et/ou une feuille de mousse.

6. Élément de support de tableau de bord (1) selon l'une des revendications 4 à 5, dans lequel la couche (6.1, 6.2) recouvre aussi le tableau de bord d'un seul tenant, en particulier avec une surface continue.

7. Élément de support de tableau de bord (1) selon l'une des revendications précédentes, dans lequel le volet (4) présente sur sa face tournée à l'opposé de l'habitacle une structure raidisseuse, en particulier une structure de nervures.

8. Élément de support de tableau de bord (1) selon l'une des revendications précédentes, dans lequel le creux (3) est formé sur une face tournée vers l'habitacle de l'élément de support de tableau de bord (1).

9. Élément de support de tableau de bord (1) selon l'une des revendications précédentes, dans lequel le creux (3) correspond pour l'essentiel au contour extérieur du volet (4).

10. Élément de support de tableau de bord (1) selon l'une des revendications précédentes, dans lequel l'élément de support de tableau de bord (1) est fixé au tableau de bord de manière amovible ou inamovible.

11. Élément de support de tableau de bord (1) selon l'une des revendications précédentes, dans lequel le volet (4) est relié à l'élément de support de tableau de bord (1) sur une face de celui-ci tournée vers le pare-brise ou à l'opposé du pare-brise.
